Europäisches Patentamt

European Patent Office

Office européen des brevets

(19)

(11) Numéro de publication: **0 041 436**
**B1**

(12) **FASCICULE DE BREVET EUROPEEN**

(45) Date de publication du fascicule du brevet:
27.03.85

(51) Int. Cl.⁴: **G 06 K 17/00, G 03 B 21/11**

(21) Numéro de dépôt: 81400814.0

(22) Date de dépôt: 22.05.81

(54) Lecteur de microfiches à recherche automatique utilisant un microordinateur.

(30) Priorité: 23.05.80 FR 8011540

(43) Date de publication de la demande:
09.12.81 Bulletin 81/49

(45) Mention de la délivrance du brevet:
27.03.85 Bulletin 85/13

(84) Etats contractants désignés:
AT BE CH DE GB IT LI NL SE

(56) Documents cités.
FR - A - 2 058 763
FR - A - 2 071 995
FR - A - 2 337 907
US - A - 3 841 747
US - A - 4 086 469

FUNKSCHAU, vol. 50, No. 8, 7 Avril 1978, pages 322-326,
R. Karnatzki: "Infrarot-Fernbedienung mit 1024
Befehlen"
IBM TECHNICAL DISCLOSURE BULLETIN, vol. 20, no.
10, mars 1978 ARMONK N.Y. (US) J.H. MORRISSEY:
"Typewriter with detached portable keyboard", pages
4250 et 4251

(73) Titulaire: **Parisot, Daniel, 131, Avenue Foch Résidence Les Platanes, F-78400 Chatou (FR)**
Titulaire: **Marlaulle, Dominique, 131, Avenue Foch Résidence Les Platanes, F-78400 Chatou (FR)**

(72) Inventeur: **Parisot, Daniel, 131, Avenue Foch Résidence Les Platanes, F-78400 Chatou (FR)**
Inventeur: **Marlaulle, Dominique, 131, Avenue Foch Résidence Les Platanes, F-78400 Chatou (FR)**

(74) Mandataire: **Tony-Durand, Serge, Cabinet Tony-Durand 22, Boulevard Voltaire, F-75011 Paris (FR)**

BUNDESDRUCKEREI BERLIN

## Description

La présente invention a pour objet un lecteur de microfiches à recherche automatique utilisant un microordinateur. Elle trouve une application dans la réalisation d'appareils permettant la lecture ou la reproduction de documents microfilmés.

Un lecteur de microfiches comprend en général un projecteur optique devant lequel des microfiches sont mises en place à l'aide d'un plateau mobile selon deux directions rectangulaires X et Y. Dans certains lecteurs, le plateau est entraîné par deux moteurs électriques et l'opérateur dispose d'un clavier à touches pour commander la sélection d'une microfiche. Pour cela, chaque touche est repérée par un code alphanumérique qui correspond aux coordonnées des fiches experimées dans le même code. En appuyant successivement sur deux touches, l'opérateur déclenche l'émission de deux séries d'impulsions électriques qui commandent la rotation des deux moteurs, ce qui amène la microfiche sélectionnée en position correcte devant le projecteur optique.

Si de tels appareils présentent un progrès par rapport aux appareils à commande manuelle, isl souffrent néanmoins de plusieurs inconvénients. En premier lieu, ils peuvent commettre des erreurs de cadrage lorsque sont effectués plusieurs va-et-vient entre une fiche index et des fiches de travail, la fiche index finissant par se trouver excentrée. En outre, ces appareils offrent assez peu de ressources en dehors des fonctions banales de positionnement des microfiches et de quelques fonctions annexes comme l'ouverture du passe-vues ou le passage en fonctionnement manuel.

Plus récemment, sont apparus des lecteurs de microfiches utilisant les ressources de la microinformatique, et en particulier des microprocesseurs. De tels appareils comprennent un clavier comportant des touches repérées par un code littéral déterminant une instruction pour le mouvement du plateau selon la direction X, des touches repérées par un code numérique déterminant une instruction pour le mouvement du plateau selon la direction Y et des touches correspondant à des fonctions particulières. Les touches d'un tel clavier constituent des contacts électriques dont l'ensemble est câblé sous forme d'une matrice à lignes et colonnes. Ces appareils comprennent également un circuit de recherche de la touche actionnée par l'opérateur, ce circuit comprenant deux démultiplexeurs dont les entrées-sorties sont reliées respectivement aux lignes et aux colonnes de la matrice du clavier et un compteur de balayage dont le contenu identifie à tout instant la ligne et la colonne explorées par les deux multiplexeurs. Ces appareils comprennent enfin, un circuit interface et un microcalculateur. L'apparition d'un court-circuit entre une ligne et une colonne du clavier produit une interruption dans le microprocesseur, lequel identifie la touche sélectionnée et exécute l'instruction correspondant à cette touche. Un circuit interface disposé entre le microcalculateur et le circuit d'alimentation des moteurs complète l'ensemble.

Bien que de tels appareils marquent encore un progrès par rapport aux appareils antérieurs, ils souffrent néanmoins d'inconvénients liés notamment à la complexité du clavier et du microcalculateur.

La présente invention a justement pour objet un lecteur de microfiches dont la conception est simplifiée, ce qui réduit sensiblement son coût tout en améliorant ses performances.

Ces buts sont atteints par l'invention telle que définie dans la revendication 1.

On observera donc que le signal délivré par le photodétecteur n'est pas décodé par un circuit de décodage particulier comme c'est l'usage avec ce type d'appareil, mais par le microordinateur qui est pourvu d'un programme de décodage approprié.

De toute façon, les caractéristiques et avantages de l'invention apparaîtront mieux après la description qui suit, d'exemples de réalisation donnés à titre explicatif et nullement limitatif. Cette description se réfère à des dessins sur lesquels:
— la figure 1 représente la structure générale d'un lecteur,
— la figure 2 représente un schéma synoptique des moyens électroniques de commande du lecteur de l'invention,
— la figure 3 illustre un mode particulier de réalisation du clavier de commande,
— la figure 4 est un schéma général du microordinateur utilisé,
— la figure 5 illustre un mode particulier de réalisation des moyens de commande des moteurs de déplacement,
— la figure 6 illustre un autre mode de réalisation des moyens de commande des moteurs de déplacement valable dans le cas où ceux-ci sont de type pas à pas,
— la figure 7 est un schéma des circuits de modulation de l'intensité lumineuse et de commande de l'objectif.

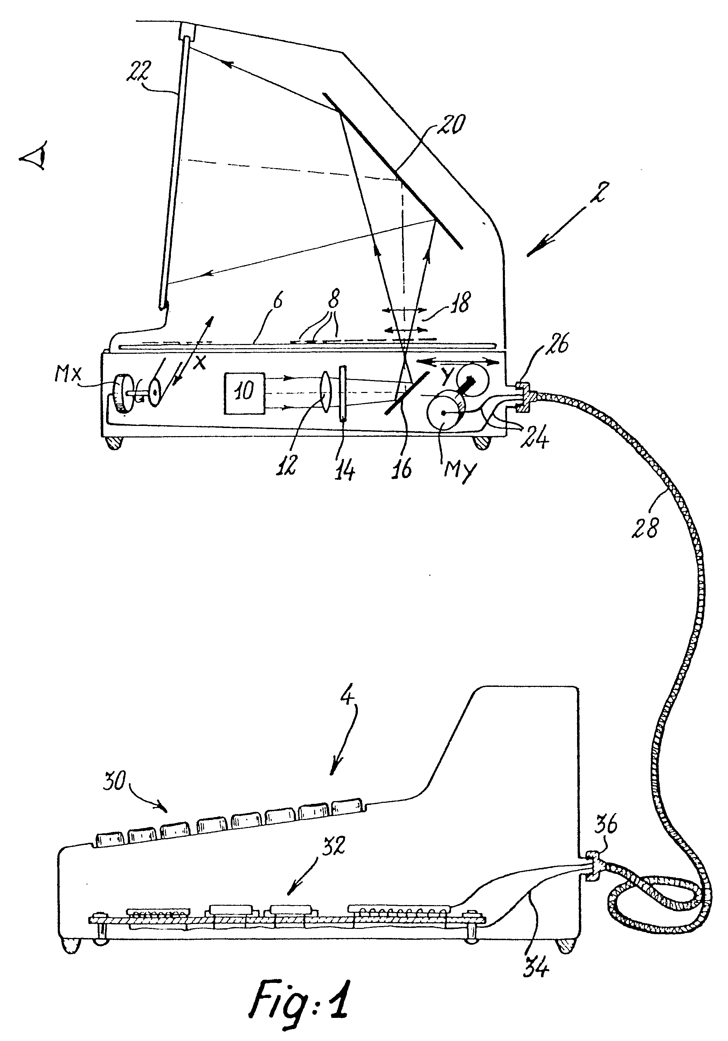

L'appareil répresenté sur la figure 1 comprend un projecteur de microfiches 2 et une console de commande 4. Le projecteur 2 peut être de tout type connu et comprendre par exemple un plateau 6, mobile selon deux directions perpendiculaires X et Y et supportant des microfiches 8. Un système optique de projection comprend une source de lumière 10, constituée par une lampe à halogène, une lentille 12, un filtre 14, un premier miroir de renvoi 16, un objectif de mise au point 18, un second miroir de renvoi 20 et renfin, un écran 22 sur lequel apparaît l'image de la microfiche située sous l'objectif 18. Le passage d'une microfiche à une autre s'effectue par translation du plateau 6 selon les directions X et Y. Ce mouvement est commandé par deux moteurs MX et MY à excitation continue, alternative ou du type pas à pas. La commande de ces moteurs s'effectue par des signaux électriques véhiculés par des connexions 24 aboutissant à un connecteur 26. Un câble de liaison 28 relie le projecteur 2 à la console de commande 4.

Cette console comprend un clavier à touches 30, des circuits électroniques 32 qui délivrent des signaux de commande véhiculés par des connexions 34 reliées à un connecteur 36 sur lequel vient se raccorder le câble 28.

Il va de soi que cette disposition des différents éléments n'est donnée qu'à titre explicatif. C'est ainsi que le système de projection 2 et la console de commande 4 pourraient être rassemblées en un seul appareil, ou que les organes de calcul pourraient être disposés dans le système de projection 2. On pourrait aussi commander plusieurs appareils de projection situés en des endroits différents par une seule console, celle-ci pouvant d'ailleurs être très éloignée des appareils de projection.

L'organisation générale des moyens de calcul et de commande de recherche de microfiche telle qu'elle est adoptée dans l'invention est illustrée par la figure 2. Le clavier 30 comprend une pluralité de touches 42 qui sont actionnées par l'opérateur. Ce clavier est associé à un émetteur 44, par exemple du type infrarouge, qui est optiquement couplé à un récepteur 46. Ce dernier alimente un microordinateur 48 apte à exécuter les instructions correspondant aux touches sélectionnées. Pour cela, le microordinateur délivre des signaux électriques dirigés vers des circuits interfaces 50 X et 50 Y de commande des moteurs MX et MY. Le microordinateur peut également commander des organes annexes 52.

Ces différents moyens vont maintenant être décrits plus en détail grâce aux figures 3 à 7.

La figure 3 tout d'abord, illustre un mode particulier de réalisation d'un clavier utilisable dans l'invention. Le clavier représenté comporte des touches réparties en deux familles. La première, D, rassemble les touches de déplacement et la seconde, F, des touches de fonction.

Les touches de déplacement contiennent chacune deux repères, l'un littéral allant par exemple de A à Z, l'autre numérique. Le premier repère correspond à un déplacement en X et le second à un déplacement en Y. Mais, malgré la présence de deux repères, chaque touche ne correspond qu'à un seul code de modulation du signal engendré par l'émetteur 44. La distinction entre les deux ordres correspondant aux deux repères est effectuée pour le microordinateur qui associe au premier code reçu le repère littéral correspondant (soit un ordre de déplacement en X) et au deuxième code reçu le repère numérique correspondant (soit un ordre de déplacement en Y). Dans le cas des touches de déplacement, le microordinateur ne déclenche les signaux de commande qu'après avoir reçu deux codes correspondant à deux actions sur les touches du clavier.

Chaque microfiche est repérée par un code alphanumérique (par exemple K 5), ce code apparaissant sur une microfiche index qui, en général, correspond à P 18. Pour faire apparaître la microfiche K 5 à l'aide du clavier de la figure 3, l'opérateur frappe d'abord la touche repérée K 11, puis sur la touche repérée E 5. Le lecteur de microfiches de l'invention ne démarre en fait qu'après réception des deux codes.

Les touches de la seconde famille concernent des fonctions diverses. Ces touches sont encore marquées par deux repères, la distinction étant encore effectuée par le microordinateur qui, cependant, peut émettre un signal de commande dès réception du premier code sans attendre le second.

A titre explicatif, les fonctions traitées peuvent être les suivantes:

$L^+$ : augmentation de la luminosité,
$L^-$ : diminution de la luminosité,
$O^+$ : réglage de l'objectif dans un sens,
$O^-$ : réglage de l'objectif dans l'autre sens,
←, ↑, →, ↓ : cadrage fin de l'image, si la fiche n'est pas une fiche standard ou selon les directions X gauche, Y haut, X droite, Y bas
> : ouverture du passe-vues
⇐, ⇑, ⇒, ⇓ : saut d'une vue à gauche, en haut, à droite, en bas,
INDEX : sélection de la vue index,
LECT : vue en lecture mise en mémoire,
M↓, M↑ : entrée ou sortie de vues en mémoire,
ON : mise en route,
OFF : arrêt,
24 X, 48 X, 50 X, commande de divers grossissements.
72 X, 75 X :
26, 27, 28, 29 : diverses fonctions pouvant être définies à la demande.

Chacune des touches du clavier commande des moyens électroniques appropriés qui déterminent un code de modulation de l'émetteur 44. Ce code peut être constitué par la durée du niveau haut d'un signal. Par exemple, on convient qu'un »0« sera représenté par une impulsion de durée 50 ms et qu'un »1« sera représenté par une impulsion de durée 100ms. Chaque signal émis est alors formé d'une suite de 1 et de 0.

L'émetteur 44 est optiquement couplé à un circuit de réception 46 qui comprend un détecteur 60 (par exemple un phototransistor), un amplificateur 62 (par exemple un amplificateur opérationnel), une résistance 64, un transistor d'interfaçage 66 qui est de préférence du type VMOS (métaloxyde — semiconducteur avec une structure en V). Ce transistor délivre un signal modulé selon le code défini plus haut (sur la figure, le signal est 011), ce signal étant dirigé vers le microordinateur 48.

3

**0 041 436**

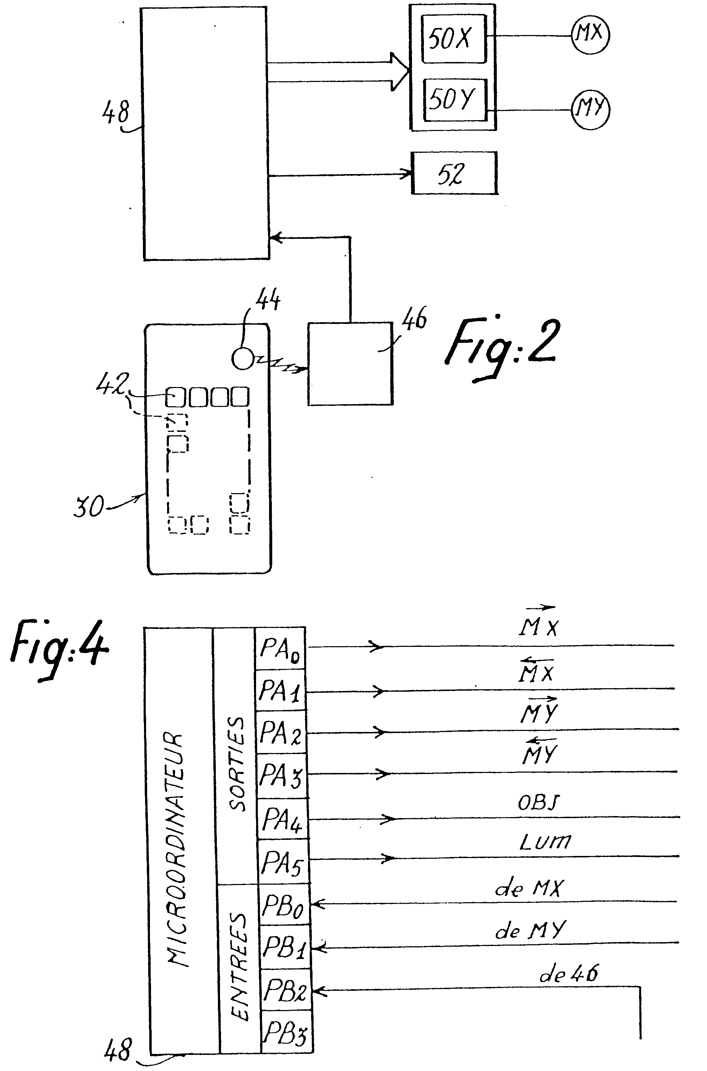

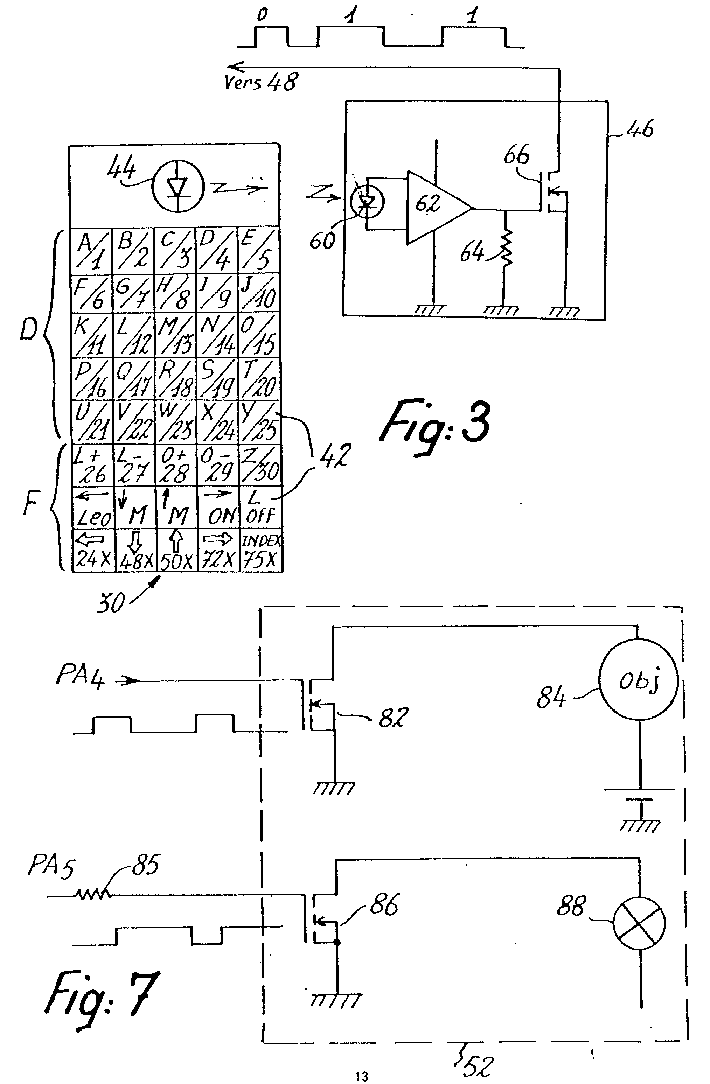

Les entrées-sorties de ce microordinateur sont schématisées sur la figure 4. Les entrées sont au nombre de 4: $PB_0$, $PB_1$, $PB_2$, $PB_3$. Seules les trois premières sont utilisées. Les entrées $PB_0$ et $PB_1$ reçoivent des signaux provenant de deux cellules de mesure mX et mY de l'angle rotation des moteurs, comme il apparaîtra plus clairement par la suite; l'entre $PB_2$ reçoit le signal délivré par le circuit récepteur 46; l'entrée $PB_3$ reste disponible.

Le microordinateur 48 possède en outre un certain nombre de sorties, dont 6 sont représentées sur cette figure respectivement $PA_0$, $PA_1$, $PA_2$, $PA_3$, $PA_4$ et $PA_5$. Ces sorties sont munies de bascules qui permettent de maintenir la valeur des signaux délivrés. Ces signaux sont les suivants:

sur $PA_0$: commande du moteur MX dans und sens ($\overrightarrow{MX}$),

sur $PA_1$: commande du moteur MX dans l'autre sens (MX),

sur $PA_2$: commande du moteur MY dans un sens (MY),

sur $PA_2$: commande du moteur MY dans l'autre sens (MY),

sur $PA_4$: commande de l'objectif (OBJ),

sur $PA_5$: commande de la luminosité (LUM).

Le microordinateur comporte, de manière connue, une Unité de Traitement Centrale, une mémoire programmable (en terminologie anglosaxonne »Programmable Read Only Memory« ou en abrégé »PROM«), ou une mémoire effacable et programmable (en abrégé »EPROM«) et une mémoire à accès direct (en terminologie anglosaxonne »Random Access Memory« ou en abrégé »RAM«).

La mémoire programmable contient le programme d'instructions du microordinateur. La mémoire à accès direct met à la disposition du microordinateur des tables correspondant aux différentes fonctions à exécuter. A chaque code reçu correspond une fonction repérée dans une de ces tables, cette fonction pouvant être exécutée grâce au programme d'instructions contenu dans la mémoire programmable.

Le détail de réalisation du microordinateur 48 n'est pas donné ici car il est à la portée de l'homme de l'art. On indiquera simplement, à titre explicatif, qu'un microordinateur qui convient à cette application est le microordinateur 8048 commercialisé par la Société INTEL. Les notices commerciales relatives à ce circuit contiennent toutes les indications nécessaires à sa mise en œuvre.

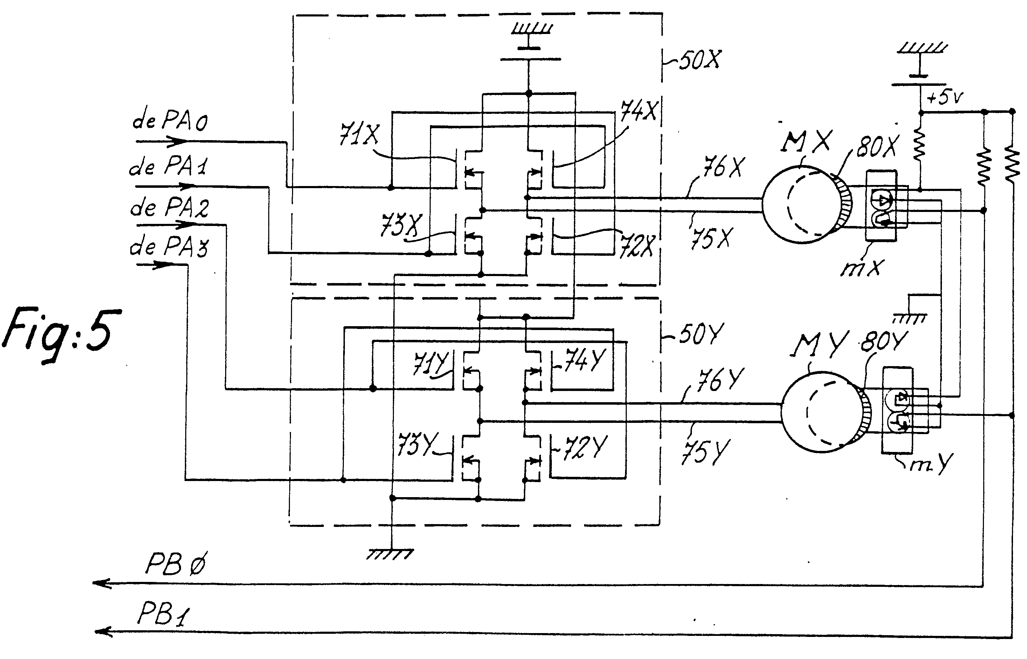

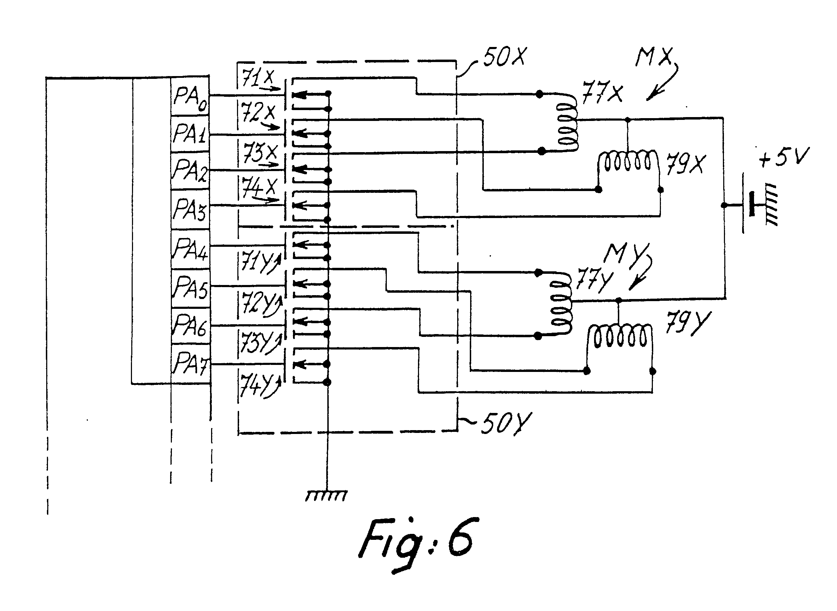

La figure 5 illustre les moyens de commande des moteurs MX et MY dans le cas où ceux-ci sont du type à excitationcontinue. Un autre exemple sera décrit à la figure 6 dans le cas des moteurs pas à pas. Dans la première hypothèse, les circuits interfaces $50X - 50Y$ sont constitués de transistors VMOS disposés dans un montage dit »en double totem-pôle«. L'étage $50X$ comprend ainsi deux transistors $71X$ et $72X$ ayant une porte commandée par le signal issu de la sortie $PA_0$ du microordinateur et deux transistors $73X$ et $74X$ dont les portes reçoivent le signal issu de la sortie $PA_1$. Deux connexions de sortie $75X$ et $76X$ véhiculent les courants d'alimentation du moteur MX pour une rotation de celui-ci soit dans un sens, soit dans l'autre.

L'étage $50Y$ est constitué de la même manière par deux paires de transistors $71Y - 72Y$ et $73Y - 74Y$ qui alimentent deux connexions $75Y$ et $76Y$ reliées au moteur MY.

Avec un tel interface, les signaux délivrés pa le microordinateur sur les paires de sorties $PA_0 - PA_1$ et $PA_2 - PA_3$ sont soit égaux à zéro (le moteur est alors à l'arrêt), soit à des niveaux complémentaires, c'est-à-dire égaux à 0–1 ou 1–0 selon le sens de rotation à donner au moteur.

Le contrôle de l'angle de rotation de chaque moteur peut se faire avantageusement au moyen d'une boucle utilisant un disque optique comportant des ouvertures ou des zones réfléchissantes radiales, ce disque étant monté sur le rotor du motor. Un couple photoémetteur-photodétecteur permet d'engendrer un signal électrique formé d'impulsions dont le nombre est directement proportionnel à l'angle de rotation du moteur. Ce signal est appliqué en retour au microordinateur qui effectue un comptage des impulsions et détermine l'instant où un nombre prédéterminé est atteint, ce qui commande le retour à zéro du courant d'alimentation et l'arrêt du moteur.

Sur la figure 5, les disques optiques portent les références 80X et 80Y et les cellules photodétectrices les références mX et mY. Le signal délivré par mX est appliqué à l'entrée $PB_0$ et le signal délivré par mY à l'entrée $PB_1$ du microordinateur.

La figure 6 représente un autre mode de réalisation des moyens de commande des moteurs, dans le cas où ceux-ci sont de type pas à pas. Les circuits interfaces $50X$ et $50Y$ sont encore constitués par 4 transistors VMOS: $71X$ à $74X$ pour le circuit $50X$ et $71Y$ à $74Y$ pour le circuit $50Y$; chaque moteur pas à pas MX, MY comprend deux enroulements d'excitation, respectivement $77X$, $79X$ pour le premier et $77Y$, $79Y$ pour le second, ces enroulements ayant par ailleurs un point milieu relié à une source de tension continue de 5 V par exemple. Le microordinateur comprend 8 sorties utilisées, référencées $PA_0$ à $PA_7$.

L'enroulement $77X$ est commandé par les transistors $71X$ et $73X$ eux-mêmes commandés par les sorties $PA_0$ et $PA_2$ du microordinateur. L'enroulement $79X$ est commandé par les transistors $72X$ et $74X$ eux-mêmes commandés par les sorties $PA_1$ et $PA_2$ du microordinateur. Ce mode de connexion est reproduit pour le moteur MY; l'enroulement $77Y$ est commandé par les transistors $71Y$ et $73Y$ reliés aux sorties $PA_4$ et $PA_6$ et l'enroulement $79Y$ par les transistors $72Y$ et $74Y$ reliés aux sorties $PA_5$ et $PA_7$.

Ce montage présente l'intérêt de permettre l'apparition d'un pic de courant lors du démarrage des

4

## 0 041 436

moteurs. Il conduit par ailleurs à une grande précision dans le déplacement du plateau et à une grande vitesse d'accès, ce qui permet d'adopter des grossissements (et corrélativement des taux de réduction) élevés pouvant aller jusqu'à 300 X.

Accessoirement, le microordinateur peut remplir d'autres fonctions rendent le lecteur de l'invention particulièrement commode d'emploi. Il peut s'agir par exemple d'une modulation de l'intensité de la source lumineuse du projecteur optique et du réglage de l'objectif. Ces moyens mis en œuvre sont représentés sur la figure 7.

La sortie PA$_4$ du microordinateur véhicule un signal en créneaux appliqué sur la porte d'un transistor 82 de type VMOS, qui commande un moteur 84 agissant sur l'objectif pour en modifier le réglage.

Par ailleurs, la sortie PA$_5$ du microordinateur délivre à une résistance 85 un signal dont le rapport cyclique détermine l'intensité lumineuse du projecteur. Ce signal est appliqué à la porte d'un transistor 86 encore du type VMOS, qui commande la source lumineuse 88 du projecteur; le rapport cyclique du signal de commande est réglé de telle manière que soit abaissée l'intensité lumineuse pendant un changement de fiche.

Les transistors VMOS utilisés dans l'invention peuvent être ceux que commercialise la Société SILI-CONIX; il peut s'agir par exemple du transistor VN 64 GA pour le transistor 86 et VN 66 AF ou V 10 KN pour le transistor 82. Les moteurs pas à pas peuvent être du type »SLOW SYN« de la Société »SUPERIOR ELECTRIC« ou de type »STEP SYN« de la Société »SANYO DENKI«.

## Revendications

1. Lecteur de microfiches à recherche automatique, du genre de ceux qui comprennent un passe-vues comprenant un plateau (6) supportant des microfiches (8), ce plateau étant mobile selon deux directions rectangulaires X et Y, deux moteurs (MX, MY) aptes à déplacer ce plateau selon ces deux directions pour amener une microfiche particulière devant un moyen de projection ou un moyen de reproduction, un circuit (32) d'alimentation de ces moteurs, un clavier (30) à touches codées, un microordinateur recevant des signaux déterminés par le clavier, un circuit interface (50 X, 50 Y) disposé entre le microordinateur et le circuit d'alimentation des moteurs caractérisé en ce que:

— le clavier (30) comporte des touches associées à un émetteur infrarouge (44) délivrant un rayonnement codé de manière unique pour chaque touche actionnée, cet émetteur étant disposé en regard d'un circuit (46) de détection de ce rayonnement lequel délivre un signal électrique codé,
— le microordinateur (48) est directement relié au circuit (46) de détection d'où il reçoit le signal électrique codé, ce microordinateur étant programmé pour qu'à chaque commande obtenue par une double action sur les touches du clavier le premier code reçu soit considéré comme relatif à un déplacement en X et le second code reçu comme relatif à un déplacement en Y, le microordinateur décodant les signaux reçus et engendrant des signaux de commande correspondants,
— chaque touche du clavier comprend un repère littéral correspondant à un déplacement en X et un repère numérique correspondant à un déplacement en Y.

2. Lecteur de microfiches selon la revendication 1, caractérisé en ce que le clavier comprend en outre des touches de fonctions, chaque touche correspondant à deux fonctions différentes distinguées par le microordinateur selon qu'elles sont commandées en premier ou en second.

3. Lecteur de microfiches selon la revendication 1, caractérisé en ce que les moteurs sont à commande continue et sont chacun munis d'un disque optique (80 X, 80 Y) et d'une cellule optique (mX, mY) de détection de la rotation de ce disque, les signaux délivrés par les deux cellules étant des impulsions appliquées au microordinateur (48) lequel compte ces impulsions et détermine l'instant d'arrêt du signal de commande de rotation des moteurs.

4. Lecteur de microfiches selon la revendication 1, caractérisé en ce que les moteurs sont de type pas à pas.

5. Lecteur de microfiches selon l'une quelconque des revendications 3 et 4, caractérisé en ce que le circuit interface (50 X, 50 Y) associé à chaque moteur (MX, MY) comprend quatre transistors (71, 72, 73, 74) de type VMOS.

6. Lecteur de microfiches selon l'une quelconque des revendications 1 à 5, caractérisé en ce qu'il comprend un circuit (85—86) apte à réduire l'intensité lumineuse des moyens de projection optique (88) pendant l'intervalle de temps séparant la projection de deux vues successives.

7. Lecteur de microfiches selon l'une quelconque des revendications 1 à 6, caractérisé en ce qu'il comprend un circuit (82) apte à commander un moteur (84) de réglage de l'objectif du système de projection.

8. Lecteur de microfiches selon l'une quelconque des revendications 1 à 7, caractérisé en ce que les fonctions particulières susceptibles d'être accomplies par le microordinateur sont choisies parmi les suivantes:

— accès à la vue,

5

**0 041 436**

- sélection parmi plusieurs taux de réduction,
- ouverture du passe-vues,
- cadrage fin d'une fiche,
- saut d'une vue à une vue adjacente selon les directions X gauche ou droite et Y bas ou haut,
- variation de la luminosité,
- réglage de l'objectif,
- mise en mémoire d'une ou plusieurs vues.

**Patentansprüche**

1. Mikroficheleseeinrichtung mit selbsttätiger Auswahl und einer Transporteinrichtung mit einem Tisch (6) für die Mikrofiches (8), der in zwei zueinander rechtwinkligen Richtungen X und Y bewegbar ist und mit zwei Motoren (MX, MY) ausgestattet ist, um den Tisch in diese Richtungen zu verschieben um einen besonderen Mikrofiche vor eine Projektions- oder Reproduktionseinrichtung zu bringen und mit einer Versorgungsschaltung (32) für die Motoren, mit einer Tastatur (30) mit codierten Drucktasten, mit einem Mikroprozessor zum Empfangen der durch die Tastatur bestimmten Signale, mit einer Interfaceschaltung (50X, 50Y) zwischen dem Mikroprozessor und der Versorgungsschaltung der Motoren, dadurch gekennzeichnet, daß

- die Drucktasten der Tastatur (30) Infrarotstrahlern (44) zugeordnet sind, die für jede betätigte Taste einen einzigartig codierten Strahl abgeben und mit einer Erkennungsschaltung (46) zusammen arbeiten, die ein elektrisch codiertes Signal abgibt;
- daß der Mikroprozessor (48) direkt an die Erkennungsschaltung (46) angeschlossen ist, von welcher er das elektrisch codierte Signal erhält und so programmiert ist, daß bei jedem durch doppelte Betätigung der Tasten der Tastatur erhaltenen Signal dessen erster Steuercode als zur Verschiebung in X-Richtung gehörig, und dessen zweiter Steuercode als zur Verschiebung in Y-Richtung gehörig betrachtet wird und der Mikroprozessor die empfangenen Signale decodiert und entsprechende Steuerbefehle erzeugt;
- daß jede Taste der Tastatur ein der Verschiebung in X Richtung entsprechendes Buchstabenzeichen und ein der Verschiebung in Y Richtung entsprechendes Ziffernzeichen aufweist.

2. Mikroficheleseeinrichtung nach Anspruch 1, dadurch gekennzeichnet, daß die Tastatur darüber hinaus Funktionstasten enthält und jede Taste zwei verschiedenen Funktionen entspricht, die vom Mikroprozessor, je nachdem, ob sie als erste oder zweite gegeben werden, voneinander unterschieden werden.

3. Mikroficheleseeinrichtung nach Anspruch 1, dadurch gekennzeichnet, daß die Motoren kontinuierlich angesteuert sind und jeweils mit einer optischen Scheibe (80X, 80Y) und einer Photozelle (mX, mY) zur Erkennung der Scheibenrotation versehen sind, und die von den beiden Photozellen abgegebenen Signale Impulse sind, die dem Mikroprozessor zugeführt werden, welcher diese Impule zählt und den Zeitpunkt für das Haltesignal zur Steuerung der Motoren bestimmt.

4. Mikroficheleseeinrichtung nach Anspruch 1, dadurch gekennzeichnet, daß die Motoren Schrittmotoren sind.

5. Mikroficheleseeinrichtung nach Anspruch 3 und 4, dadurch gekennzeichnet, daß die jedem Motor (MX, MY) zugeordnete Interfaceschaltung (50X, 50Y) vier VMOS-Transistoren (71—74) enthält.

6. Mikroficheleseeinrichtung nach einem der Ansprüche 1 bis 5, dadurch gekennzeichnet, daß eine Schaltung (85—86) zur Verringerung der Lichtintensität der optischen Projektionseinrichtung in den zwischen zwei aufeinander folgenden Bildprojektionen auftretenden Pausen vorgesehen ist.

7. Mikroficheleseeinrichtung nach einem der Ansprüche 1 bis 6, dadurch gekennzeichnet, daß eine Schaltung (82) für einen Steuermotor (84) zur Einstellung des Projektionsobjektivsystems vorgesehen ist.

8. Mikroficheleseeinrichtung nach einem der Ansprüche 1 bis 7, dadurch gekennzeichnet, daß die besonderen vom Mikroprozessor durchführbaren Funktionen unter folgenden auswählbar sind:

- Zugriff auf das jeweilige Bild,
- Auswahl unter mehreren Verkleinerungsmaßstäben,
- Öffnen des Transporttisches,
- abschließende Bildausrichtung eines Mikrofiches,
- Bildsprung auf ein benachbartes Bild nach rechts oder links in X-Richtung oder nach oben oder unten in Y-Richtung,
- Helligkeitseinstellung,
- Objektiveinstellung,
- Speicherung eines oder mehrerer Bilder.

6

**Claims**

1. Automatic-search microfiche reader of the type comprising a card-changer constituted by a plate (6) for supporting microfiches (8), this plate being movable in two rectangular directions X and Y, two motors (MX, MY) adapted to displace this plate in these two directions in order to bring a particular microfiche in front of a projection means or a reproduction means, a circuit (32) for supplying these motors, a keyboard (30) having coded keys, a microcomputer for receiving signals determined by the keyboard, an interface circuit (50X, 50Y) disposed between the microcomputer and the circuit for supplying the motors, characterized in that:

- the keyboard (30) is provided with keys associated with an infrared-radiation emitter (44) for delivering radiation which is uniquely coded in respect of each actuated key, this emitter being placed opposite to a circuit (46) for detecting this radiation, which delivers a coded electrical signal,
- the microcomputer (48) is connected directly to the detection circuit (46) from which it receives the coded electrical signal, this microcomputer being programmed so that, in respect of each controlled operation obtained by a double action on the keys of the keyboard, the first code received should be considered as relative to a displacement along the X-axis and the second code received should be considered as relative to a displacement along the Y-axis, the function of the microcomputer being to decode the received signals and to generate corresponding control signals,
- each key of the keyboard has a literal reference symbol corresponding to a displacement along the X-axis and a numerical reference symbol corresponding to a displacement along the Y-axis.

2. Microfiche reader in accordance with claim 1, characterized in that the keyboard further comprises function keys, each key being such as to correspond to two different functions which are distinguished by the microcomputer according as they are initiated either first or second in sequence.

3. Microfiche reader in accordance with claim 1, characterized in that the motors are of the direct-current control type and are each equipped with an optical disc (80X, 80Y) and with an optical cell (mX, mY) for detecting the rotation of this disc, the signals delivered by the two cells being pulses applied to the microcomputer (48) which counts these pulses and determines the instant of interruption of the signal for controlling the rotation of the motors.

4. Microfiche reader in accordance with claim 1, characterized in that the motors are of the stepping type.

5. Microfiche reader in accordance with either of claims 3 and 4, characterized in that the interface circuit (50X, 50Y) associated with each motor (MX, MY) comprises four transistors (71, 72, 73, 74) of the VMOS type.

6. Microfiche reader in accordance with any one of claims 1 to 5, characterized in that it comprises a circuit (85—86) which is capable of reducing the light intensity of the optical projection means (88) during the time interval which elapses between the projection of two successive views.

7. Microfiche reader in accordance with any one of claims 1 to 6, characterized in that it comprises a circuit (82) which is capable of controlling a motor (84) for adjusting the objective of the projection system.

8. Microfiche reader in accordance with any one of claims 1 to 7, characterized in that the particular functions which may be performed by the microcomputer are selected from the following:

- access to the view,
- selection from a number of reduction values,
- opening of the card-changer,
- fine centering of a card,
- jumping from one view to an adjacent view in the directions X left or right and Y bottom or top,
- variation of light intensity,
- adjustment of the objective,
- storage of one or a number of views.

Fig:1

*Fig:2*

*Fig:4*

**Fig. 3**

**Fig. 7**

Fig:5

de PA0
de PA1
de PA2
de PA3

71X
74X
73X
72X
50X
76X
75X
MX
80X
mx
+5v

71Y
74Y
73Y
72Y
50Y
76Y
75Y
MY 80Y
mY

PB∅
PB1

0 041 436

Fig. 6